# EUROPÄISCHE PATENTSCHRIFT

(11) **EP 3 625 500 B1**
(45) Veröffentlichungstag und Bekanntmachung des Hinweises auf die Patenterteilung: **03.04.2024**
(21) Anmeldenummer: 18722937.2
(22) Anmeldetag: 26.04.2018
(51) Int. Cl.: F21S 41/147, F21S 41/148, F21S 45/48, F21S 45/49, F21S 41/39, F21S 41/47, F21V 29/74, F21S 41/32, F21S 41/40, F21S 41/36, F21S 41/663, F21S 41/255, F21S 41/43, B60Q 1/10, F21S 41/29, F21S 41/19, F21S 41/24

(54) **LICHTMODUL EINES KRAFTFAHRZEUGSCHEINWERFERS UND KRAFTFAHRZEUGSCHEINWERFER MIT EINEM SOLCHEN LICHTMODUL**
LIGHTING MODULE OF A MOTOR VEHICLE HEADLIGHT, AND MOTOR VEHICLE HEADLIGHT COMPRISING SUCH A LIGHTING MODULE
MODULE LUMINEUX D'UN PROJECTEUR DE VÉHICULE À MOTEUR ET PROJECTEUR DE VÉHICULE À MOTEUR COMPRENANT LEDIT MODULE LUMINEUX

(30) Priorität: 18.05.2017 DE 102017110876
(43) Veröffentlichungstag der Anmeldung: 25.03.2020
(73) Patentinhaber: Marelli Automotive Lighting Reutlingen (Germany) GmbH, 72762 Reutlingen (DE)
(72) Erfinder: SCHAEFER, Bernhard, 73779 Deizisau (DE); TEYSSEYRE, Sylvain, 72764 Reutlingen (DE); BRAUN, Stephan, 70771 Echterdingen (DE); SINGER, Ephraim, 72762 Reutlingen (DE)
(74) Vertreter: DREISS Patentanwälte PartG mbB
(86) Internationale Anmeldenummer: PCT/EP2018/060749
(87) Internationale Veröffentlichungsnummer: WO 2018/210547

(56) Entgegenhaltungen:
- EP-A1- 2 390 561
- WO-A1-2015/176340
- CN-A- 105 020 652
- CN-A- 105 351 846
- CN-U- 204 678 205
- DE-A1-102013 108 344
- DE-A1-102013 108 345
- DE-A1-102013 207 850
- DE-A1-102014 215 785
- DE-B3-102012 203 929
- KR-A- 20160 035 393
- US-A1- 2013 107 560
- US-A1- 2015 292 705
- US-A1- 2016 091 159
- US-A1- 2016 201 870

## Beschreibung

Die vorliegende Erfindung betrifft ein Lichtmodul eines Scheinwerfers eines Kraftfahrzeugs nach dem Oberbegriff des Anspruchs 1. Ein solches Lichtmodul ist aus der Druckschrift DE 10 2013 207 850 A1 bekannt. Das Lichtmodul umfasst ein erstes Untermodul zur Erzeugung einer abgeblendeten Lichtverteilung mit einer horizontalen Helldunkelgrenze, ein zweites Untermodul zur Ausleuchtung eines Fernbereichs oberhalb der Helldunkelgrenze und zur Realisierung einer Fernlichtverteilung und eine Projektionslinse zum Abbilden des von den beiden Untermodulen ausgesandten Lichts als resultierende Lichtverteilung des Lichtmoduls auf einer Fahrbahn vor dem Kraftfahrzeug. Beide Untermodule umfassen jeweils mindestens eine LED als Lichtquelle zum Emittieren von Licht, einen Kühlkörper in thermischem Kontakt mit den LEDs zum Ableiten der während des Betriebs der LEDs erzeugten Wärme und eine Primäroptik zur Bündelung des von den LEDs emittierten Lichts und zum Umlenken des Lichts in Richtung der Projektionslinse. Die Primäroptik zum Bündeln des von der oder den LEDs ausgesandten Lichts kann im Rahmen der vorliegenden Erfindung als ein Reflektor, eine Linse, ein Lichtleiter o.ä. ausgebildet sein.

Ferner betrifft die Erfindung einen Kraftfahrzeugscheinwerfer, der ein Gehäuse mit einer in Lichtaustrittsrichtung ausgebildeten Lichtaustrittsöffnung aufweist, welche durch eine transparente Abdeckscheibe verschlossen ist, um das Eindringen von Feuchtigkeit und/oder Schmutz in das Innere des Gehäuses zu verhindern. Im Inneren des Gehäuses ist ein Lichtmodul zum Aussenden von Licht und zur Erzeugung einer resultierenden Lichtverteilung auf einer Fahrbahn vor dem Kraftfahrzeug angeordnet.

Lichtmodule und Kraftfahrzeugscheinwerfer der eingangs genannten Art sind in den verschiedensten Ausgestaltungen aus dem Stand der Technik bekannt. Nach dem derzeitigen Stand der Technik sind die Lichtmodule jeweils zur Realisierung einer oder mehrerer vorgegebener Lichtfunktionen und zur Realisierung bestimmter Lichtstärken ausgelegt und speziell entworfen. So kann es in einem Scheinwerfer bspw. Elemente zur Erzeugung einer herkömmlichen Fernlichtverteilung, Elemente zur Erzeugung einer in Segmente unterteilten Fernlichtverteilung (z.B. Streifen- oder Teilfernlicht), Elemente zur Erzeugung abgeblendeter Lichtverteilungen mit unterschiedlichen Verläufen einer Helldunkelgrenze gemäß den gesetzlichen Anforderungen in Europa, den USA, Japan, China etc., und Elemente zur Erzeugung einer abgeblendeten Lichtverteilung mit unterschiedlichen Lichtstärken geben. Jedes dieser Lichtmodule wird mit allen seinen Bauteilen bzw. Elementen für den speziellen Anwendungsfall ausgelegt und entworfen. Dadurch gestaltet sich die Entwicklung neuer Lichtmodule für einen neuen Anwendungsfall sehr aufwendig und teuer. Aus diesem Grund wäre ein modular aufgebautes Lichtmodul, bei dem durch einfaches Austauschen einzelner Baugruppen des Lichtmoduls gegen anders ausgebildete Baugruppen möglichst viele verschiedene Lichtfunktionen realisiert werden können, sehr wünschenswert. Es sollen nach der Art eines Baukastens einzelne Baugruppen des Lichtmoduls ausgetauscht werden, damit die Untermodule des Lichtmoduls gewünschte Lichtverteilungen mit bestimmten Lichtstärken erzeugen können.

Lichtmodule, die zur Erzeugung unterschiedlicher Lichtfunktionen ausgelegt sind, sind derzeit noch relativ verschachtelt, d.h. die Elemente zur Erzeugung der Lichtfunktionen bzw. deren Bauteile sind nicht streng voneinander getrennt. So kann es bspw. sein, dass der Strahlengang von Licht, das von der Lichtquelle eines ersten Elements emittiert wird, auf seinem Weg zu der Primäroptik des ersten Elements durch Teile des zweiten Elements verläuft. Primäroptiken des ersten und des zweiten Elements können als ein gemeinsames integrales Bauteil ausgebildet sein. Ebenso können die LEDs der ersten und zweiten Untermodule auf der gleichen Platine angeordnet sein. Insgesamt ist bei den bekannten Lichtmodulen eine strenge Unterteilung der einzelnen Elemente nicht möglich. Das ist jedoch eine wesentliche Voraussetzung für einen modularen Aufbau des Lichtmoduls.

Des Weiteren ist es ein stetes Bestreben der Entwickler von Lichtmodulen, den Bauraum zu reduzieren, den ein Lichtmodul im Inneren eines Scheinwerfergehäuses beansprucht. Insbesondere Lichtmodule, die verschiedene Lichtfunktionen realisieren können, sind derzeit noch relativ großbauend und beanspruchen dementsprechend viel Platz im Inneren des Scheinwerfergehäuses. Aus diesem Grund wäre ein besonders kompaktes, hochintegriertes Lichtmodul, das verschiedene Lichtfunktionen auf kleinstem Raum realisiert, sehr wünschenswert. Gleichzeitig sollte aber der Aspekt der Modularität des Lichtmoduls nicht außer Acht gelassen werden.

Der vorliegenden Erfindung liegt somit die Aufgabe zugrunde, ein solches Lichtmodul dahingehend auszugestalten und weiterzubilden, dass es möglichst kompakt und kleinbauend, kostengünstig in der Herstellung und modular aufgebaut ist, so dass durch einfaches Austauschen einzelner Bauteile des Lichtmoduls gegen anders ausgebildete Bauteile möglichst viele verschiedene Lichtfunktionen realisiert werden können.

Zur Lösung dieser Aufgabe wird ausgehend von dem Lichtmodul der eingangs genannten Art vorgeschlagen, dass das Lichtmodul durch eine horizontale Trennebene in die beiden Untermodule unterteilt ist, wobei sämtliche Bauteile des ersten Untermoduls oberhalb der horizontalen Ebene und sämtliche Bauteile des zweiten Untermoduls unterhalb der horizontalen Ebene angeordnet sind und dass die Kühlkörper der beiden Untermodule jeweils eine Vertiefung aufweisen, in der die übrigen Bauteile des jeweiligen Untermoduls angeordnet sind, und wobei die LEDs jeweils Licht in eine Hauptabstrahlrichtung nach oben bzw. in einen oberen Halbraum abstrahlen.

Diese strenge Unterteilung des Lichtmoduls in die beiden Untermodule durch die horizontale Trennebene ist eine wichtige Voraussetzung dafür, dass das Lichtmodul überhaupt modular aufgebaut werden kann. Erst durch diese strenge Trennung ist es möglich, die Untermodule separat voneinander durch den Austausch bestimmter Bauteile der Untermodule auf einen speziellen Anwendungsfall zur Erzeugung einer bestimmten Lichtverteilung mit einer bestimmten Lichtstärke auszulegen. Wenn bspw. ein Lichtmodul zur Erzeugung eines Abblendlichts durch ein erstes Untermodul und eines herkömmlichen Fernlichts durch ein zweites Untermodul ausgelegt ist, kann es durch Austausch einiger Bauteile des zweiten Untermoduls zur Erzeugung eines Streifen- oder Teilfernlichts ausgelegt werden. Insbesondere muss lediglich die Lichtquelle und die Primäroptik des zweiten Untermoduls ausgetauscht werden. Unter Umständen könnte auch der Kühlkörper ausgetauscht werden, falls dies erforderlich sein sollte. Das restliche Lichtmodul, insbesondere das erste Untermodul zur Erzeugung des Abblendlichts, ein Halterahmen, ein Linsenhalter und die Projektionslinse können unverändert übernommen werden. In einem anderen Beispiel kann ausgehend von einem Lichtmodul zur Erzeugung eines Abblendlichts mit einer bestimmten Lichtstärke durch ein erstes Untermodul und eines herkömmlichen Fernlichts durch ein zweites Untermodul durch Austausch einiger Bauteile des ersten Untermoduls dieses zur Erzeugung eines Abblendlichts mit höherer Lichtstärke ausgelegt werden. Insbesondere muss lediglich die Lichtquelle des ersten Untermoduls ausgetauscht werden. Unter Umständen könnte auch die Primäroptik ausgetauscht werden, falls dies erforderlich sein sollte. Das restliche Lichtmodul, insbesondere der Kühlkörper des ersten Lichtmoduls, das zweite Untermodul zur Erzeugung des Fernlichts, ein Halterahmen, ein Linsenhalter und die Projektionslinse können unverändert übernommen werden. Das erfindungsgemäße Lichtmodul kann also nach der Art eines Baukastens aus verschiedenen Bauteilen modular zusammengesetzt werden, damit die Untermodule die gewünschten Lichtverteilungen mit den gewünschten Lichtstärken erzeugen.

Erfindungsgemäß weisen die Kühlkörper der beiden Untermodule jeweils eine Vertiefung auf, in der die übrigen Bauteile des jeweiligen Untermoduls angeordnet sind. In diese Vertiefungen können die einzelnen Bauteile der Untermodule eingesetzt und darin befestigt werden.

Es wird vorgeschlagen, dass in die Vertiefung des Kühlkörpers des ersten Untermoduls nacheinander die Primäroptik und dann eine Leiterplatte mit der mindestens einen darauf befestigten und elektrisch kontaktierten LED eingesetzt sind. Die eingesetzten Bauteile werden in der Vertiefung befestigt. Die mindestens eine LED und die Primäroptik des ersten Untermoduls sind zum Aussenden einer abgeblendeten Lichtverteilung mit einer horizontalen Helldunkelgrenze ausgebildet. Es können mehrere LEDs auf der Leiterplatte vorgesehen sein, die jeweils einen bestimmten Bereich (sog. Segment) der Primäroptik (z.B. eine Reflexionsfläche eines Reflektors) beleuchten. Es ist bspw. denkbar, dass am Beispiel einer als Reflektor ausgebildeten Primäroptik die Reflexions¬fläche in drei streifenförmige Segmente unterteilt ist, wobei die beiden seitlichen Segmente eine breit gestreute Grundlichtverteilung mit einer symmetrischen horizontalen Helldunkelgrenze erzeugen und das mittlere Segment eine konzentrierte Spotlichtverteilung mit einer asymmetrischen Helldunkelgrenze erzeugt, wobei eine Überlagerung des von den verschiedenen Segmenten reflektierten Lichts die Abblendlichtverteilung erzeugt. Die Helldunkelgrenze kann durch eine entsprechende Form der Reflexionsfläche realisiert werden. Alternativ ist es denkbar, dass im Strahlengang des von der Primäroptik gebündelten und umgelenkten Lichts ein Blendenelement angeordnet ist, das einen Teil des gebündelten und umgelenkten Lichts abschattet. Eine Kante des Blendenelements kann von der Projektionslinse als Helldunkelgrenze auf der Fahrbahn vor dem Kraftfahrzeug abgebildet werden. Das Blendenelement ist derart in dem Lichtmodul angeordnet, dass zumindest die Kante des Blendenelements als Teil des ersten Untermoduls auf oder oberhalb der horizontalen Trennebene angeordnet ist. Es wäre allerdings auch denkbar, dass das Blendenelement bzw. dessen Vorderkante unterhalb der horizontalen Trennebene angeordnet ist.

Um Abblendlicht mit unterschiedlichen Lichtstärken aussenden zu können, werden auf verschiedenen Platinen LEDs mit unterschiedlichen Lichtstärken montiert. Erfindungsgemäß ist vorgesehen, dass die LEDs Licht nach oben bzw. in einen oberen Halbraum abstrahlen. Je nach dem, welche der Platinen mit LEDs in die Vertiefung des Kühlkörpers des ersten Untermoduls eingesetzt werden, sendet das Untermodul Abblendlicht mit einer bestimmten Lichtstärke aus. Unter Umständen kann es dann erforderlich sein, auch die Primäroptik auszutauschen, um eine an die jeweils verwendeten LEDs angepasst Primäroptik (z.B. einen Reflektor mit einer entsprechend ausgestalteten Reflexionsfläche) zur Verfügung zu stellen.

Ferner wird vorgeschlagen, dass in die Vertiefung des Kühlkörpers des zweiten Untermoduls nacheinander eine Leiterplatte mit der mindestens einen darauf befestigten und elektrisch kontaktierten LED und dann die Primäroptik eingesetzt sind. Die Primäroptik kann als ein Reflektor oder als ein massiver transparenter Kunststoffkörper ausgebildet sein, in den Licht eingekoppelt, totalreflektiert und gebündelt und umgelenkt wieder ausgekoppelt wird. Zur Realisierung eines herkömmlichen Fernlichts, umfasst die LED mindestens eine Hochleistungs-LED. In diesem Fall ist die Primäroptik vorzugsweise als ein Reflektor ausgebildet. Zur Realisierung eines Streifen-oder Teilfernlichts sind mehrere auf der Leiterplatte nebeneinander angeordnete LEDs vorgesehen, wobei jede der LEDs Licht zum Ausleuchten eines der Streifen des Streifen-oder Teilfernlichts aussendet. In diesem Sinne wird vorgeschlagen, dass die Primäroptik des zweiten Untermoduls als ein massiver transparenter Kunststoffkörper ausgebildet ist, der eine der mindestens einen LED des zweiten Untermoduls zugewandte Lichteintrittsfläche, über die von der mindestens einen LED ausgesandtes Licht eintritt, totalreflektierende Grenzflächen zum Umlenken des eingetretenen Lichts und eine bei montiertem Lichtmodul der Projektionslinse zugewandte Lichtaustrittsfläche aufweist, über die das umgelenkte Licht aus dem Kunststoffkörper austritt. Unter Umständen kann es erforderlich sein, die Neigung der Platine mit den darauf montierten LEDs je nach gewünschter Fernlichtverteilung (herkömmliches Fernlicht oder Streifen- bzw. Teilfernlicht) zu verändern. Dies kann entweder durch Verwendung eines zusätzlichen keilförmigen Einsatzteils, das auf den Kühlkörper unter die Platine eingesetzt wird, oder durch Verwendung eines anderen Kühlkörpers mit entsprechend angepasster Aufnahme für die Platine realisiert werden. Die Hauptabstrahlrichtung der LEDs ist dabei erfindungsgemäß in den oberen Halbraum gerichtet.

'Oben' bezieht sich dabei auf einen Bereich, der sich bei in das Kraftfahrzeug eingebautem Lichtmodul oberhalb einer sich parallel zur Fahrtrichtung des Kraftfahrzeugs erstreckenden Horizontalebene befindet, die durch eine Lichtaustrittsfläche der LED verläuft. Anders ausgedrückt, bedeutet 'oben' oberhalb einer Flächenerstreckung einer Leiterplatte, auf der die LEDs montiert und kontaktiert sind.

Gemäß einer vorteilhaften Ausführungsform der Erfindung wird vorgeschlagen, dass ein sich bei montiertem Lichtmodul in einer horizontalen Ebene erstreckendes plattenartiges verspiegeltes Blendenelement mit einer Vorderkante, welche die Projektionslinse als horizontale Helldunkelgrenze der abgeblendeten Lichtverteilung auf der Fahrbahn vor dem Kraftfahrzeug abbildet, als letztes Bauteil in die Vertiefung des Kühlkörpers des zweiten Untermoduls eingesetzt ist, wobei die Vorderkante des Blendenelements bei montiertem Lichtmodul in bzw. oberhalb der horizontalen Trennebene des Lichtmoduls angeordnet ist. Somit ist selbst in dem Fall, dass ein Blendenelement, das dem ersten Untermodul zugeordnet ist, in die Vertiefung des Kühlkörpers des zweiten Untermoduls eingesetzt ist, eine strenge Unterteilung der Untermodule ober- und unterhalb der horizontalen Trennebene möglich. Das sich in einer horizontalen Ebene erstreckende plattenartige Blendenelement ist bei montiertem Lichtmodul vorzugsweise vollständig in oder oberhalb der horizontalen Trennebene angeordnet.

Falls die Primäroptik des zweiten Untermoduls als ein massiver transparenter Kunststoffkörper ausgebildet ist, ist vorzugsweise das Blendenelement vor dem Einsetzen des Kunststoffkörpers in die Vertiefung des Kühlkörpers des zweiten Untermoduls an dem Kunststoffkörper mittels Heißprägen befestigt und anschließend zusammen mit diesem in die Vertiefung des Kühlkörpers des zweiten Untermoduls eingesetzt. Auf diese Weise kann auf eine separate Befestigung des Blendenelements an einem der Kühlkörper verzichtet werden.

Gemäß einer anderen vorteilhaften Weiterbildung der vorliegenden Erfindung wird vorgeschlagen, dass die Kühlkörper der beiden Untermodule jeweils eine Auflagefläche aufweisen, mit der sie bei montiertem Lichtmodul einander gegenüber liegen. Die Kühlkörper stehen über die Auflageflächen zumindest mittelbar miteinander in Kontakt. Es wäre bspw. denkbar, dass eine Leiterplatte des oberen Untermoduls mit den darauf angeordneten oberen LEDs zwischen den Auflageflächen eingespannt wird, so dass die Auflageflächen mittelbar über die Leiterplatte miteinander in Kontakt stehen. Die Auflageflächen der Kühlkörper erstrecken sich vorteilhafterweise über einen Großteil einer entgegen der Lichtaustrittsrichtung gerichteten Rückseite sowie an den Seiten der Kühlkörper der beiden Untermodule. An der Vorderseite der Kühlkörper ist die darin ausgebildete Vertiefung in Lichtaustrittsrichtung geöffnet, um einen Austritt des gebündelten Lichts aus der in der Vertiefung angeordneten Primäroptik zu erlauben. Die Auflageflächen der Kühlkörper haben also eine U-Form, wobei die Öffnung des U in Lichtaustrittsrichtung zeigt. Über die Auflageflächen kommt es zu einem Wärmeaustausch zwischen den Kühlkörpern, so dass stets eine optimale Wärmeverteilung und -abgabe ermöglicht ist.

Vorzugsweise sind die Kühlkörper bei montiertem Lichtmodul aneinander befestigt, insbesondere mittels Schrauben. Zumindest einige der in den Vertiefungen der Kühlkörper oder zwischen den Kühlkörpern angeordneten Bauteile (z.B. eine Leiterplatte) der Untermodule werden durch das Befestigen der Kühlkörper aneinander in die Vertiefungen gedrückt und darin gehalten bzw. befestigt oder in sonstiger Weise in dem Lichtmodul fixiert. Außerdem kann durch die Befestigung ein optimaler Wärmeaustausch zwischen den Kühlkörpern ermöglicht werden. Schließlich wäre es auch möglich, einzelne Bauteile, bspw. eine oder beide Platinen mit den LEDs und/oder das sich in einer horizontalen Ebene erstreckende plattenartige Blendenelement, zwischen den Kühlkörpern einzuspannen und so in dem Lichtmodul zu positionieren und zu befestigen.

Vorteilhafterweise weisen die Kühlkörper der beiden Untermodule jeweils an einer entgegen der Lichtaustrittsrichtung gerichteten Rückseite eine Öffnung auf, über die Steckerelemente von außerhalb des Lichtmoduls zugänglich sind, die auf Leiterplatten mit der mindestens einen darauf befestigten und elektrisch kontaktierten LED der jeweiligen Untermodule angeordnet und elektrisch kontaktiert sind. Über diese Steckerelemente können die LEDs des Lichtmoduls somit elektrisch kontaktiert und mit Energie und/oder Ansteuersignalen versorgt werden.

Vorzugsweise sind die beiden Untermodule mit einer in Lichtaustrittsrichtung gerichteten Vorderseite der Kühlkörper an einem Halterahmen befestigt, über den das Lichtmodul in einem Gehäuse des Scheinwerfers befestigt ist. Ferner wird vorgeschlagen, dass auf einer den Untermodulen gegenüberliegenden Vorderseite des Halterahmens ein Linsenhalter mit der daran befestigten Projektionslinse befestigt ist. Der Linsenhalter ist vorzugsweise als ein weitgehend geschlossener Tubus, insbesondere aus einem Kunststoffmaterial, ausgebildet. Durch die Ausgestaltung des Linsenhalters als Tubus kann das Austreten von unerwünschtem Streulicht aus dem Lichtmodul verhindert werden. Somit kann das komplette Lichtmodul als eine kompakte Einheit ausgebildet werden.

Des Weiteren wird vorgeschlagen, dass der Halterahmen seitlich Lagerstellen aufweist, über welche das Lichtmodul um eine horizontale Drehachse verschwenkbar in dem Gehäuse des Scheinwerfers gelagert ist. Dadurch kann eine Leuchtweitenregulierung realisiert werden. Ferner kann dadurch die Lichtverteilung in bestimmten Verkehrs-und/oder Fahrsituationen angehoben werden, um die Reichweite zu erhöhen.

Schließlich wird zur Lösung der Aufgabe der vorliegenden Erfindung auch ein Kraftfahrzeugscheinwerfer der eingangs genannten Art vorgeschlagen, wobei im Inneren des Gehäuses des Scheinwerfers mindestens ein erfindungsgemäßes Lichtmodul der oben beschriebenen Art angeordnet ist. Selbstverständlich wäre es denkbar, in dem Scheinwerfergehäuse mehrere erfindungsgemäße Lichtmodule anzuordnen. Dabei kann jedes der Untermodule der Lichtmodule eine unterschiedliche Lichtverteilung erzeugen. Es wäre aber auch denkbar, dass eine bestimmte Lichtverteilung des Scheinwerfers durch mehrere Untermodule und durch Überlagerung der von diesen Lichtmodulen erzeugten Lichtverteilungen realisiert wird. So wäre es bspw. denkbar, dass eines der Untermodule eine breit gestreute Grundlichtverteilung mit einer horizontalen, streng symmetrischen Helldunkelgrenze erzeugt, während ein anderes der Untermodule eine konzentrierte Spotlichtverteilung mit einer asymmetrischen Helldunkelgrenze erzeugt, wobei eine Überlagerung des Grundlichts und des Spotlichts eine Abblendlichtverteilung gemäß den gesetzlichen Vorgaben liefert.

Weitere Merkmale und Vorteile der vorliegenden Erfindung werden nachfolgend unter Bezugnahme auf die Figuren näher erläutert. Die vorliegende Erfindung kann die nachfolgend anhand eines bevorzugten Ausführungsbeispiels beschrieben und in den Figuren gezeigten Merkmale auch separat voneinander oder in einer anderen Kombination als hier beschrieben aufweisen. In den Figuren zeigen:
Figur 1 ein aus dem Stand der Technik bekanntes Lichtmodul in einer perspektivischen Ansicht;
Figur 2 einen rückwärtigen Teil des Lichtmoduls aus Figur 1;
Figur 3 eine Seitenansicht des Lichtmoduls aus Figur 1;
Figur 4 ein erfindungsgemäßes Lichtmodul gemäß einer bevorzugten Ausführungsform in einer Schnittansicht;
Figur 5 ein erfindungsgemäßes Lichtmodul gemäß einer weiteren bevorzugten Ausführungsform in einer perspektivischen Ansicht;
Figur 6 ein erfindungsgemäßes Lichtmodul gemäß Figur 4 in einer perspektivischen Ansicht;
Figur 7 das Lichtmodul aus Figur 5 in einer Explosionsansicht;
Figur 8 das Lichtmodul aus Figur 6 in einer Explosionsansicht;

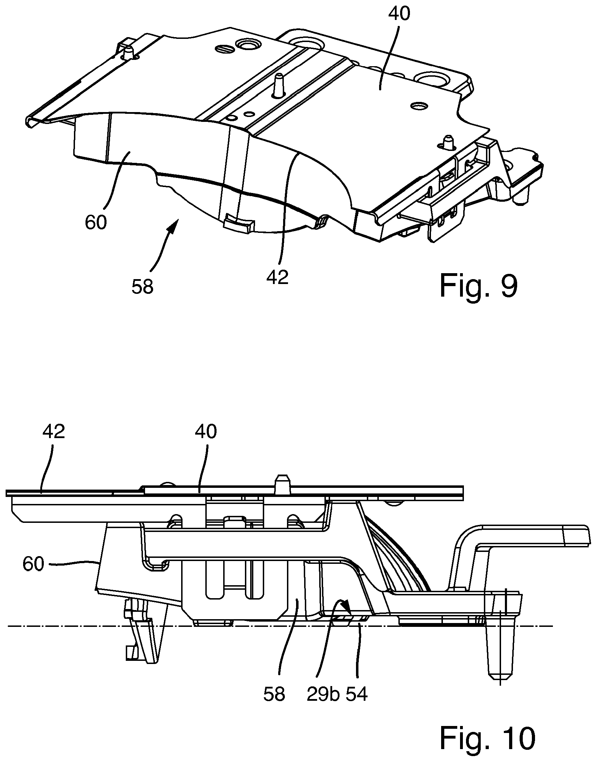

Figur 9 eine Primäroptik des zweiten Untermoduls zusammen mit dem Blendenelement des ersten Untermoduls des Lichtmoduls aus Figur 8 in einer perspektivischen Ansicht;
Figur 10 die Primäroptik des zweiten Untermoduls und das Blendenelement des ersten Untermoduls aus Figur 9 in einer Seitenansicht;

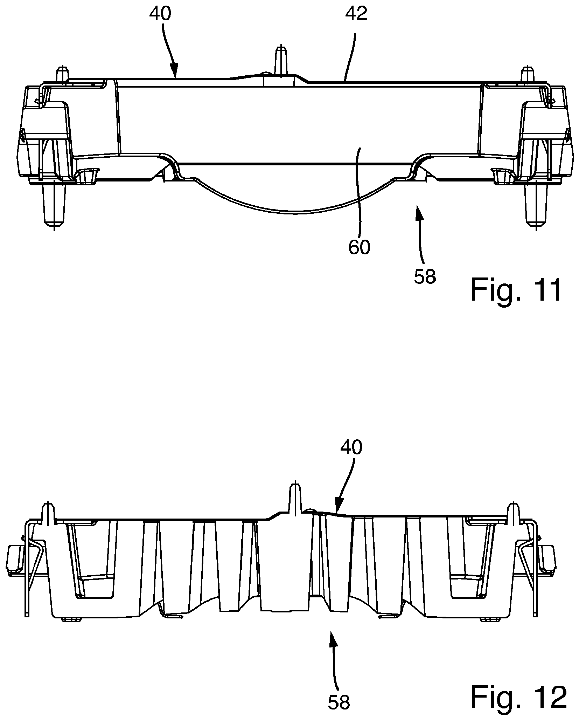

Figur 11 die Primäroptik des zweiten Untermoduls und das Blendenelement des ersten Untermoduls aus Figur 9 in einer Ansicht von vorne;
Figur 12 die Primäroptik des zweiten Untermoduls und das Blendenelement des ersten Untermoduls aus Figur 9 in einer Schnittansicht;

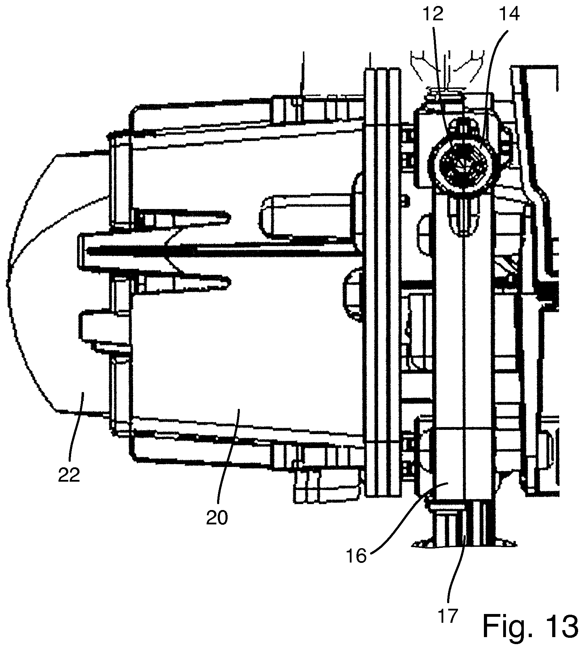

Figur 13 eine Seitenansicht eines vorderen Teils des Lichtmoduls aus Figur 4; und

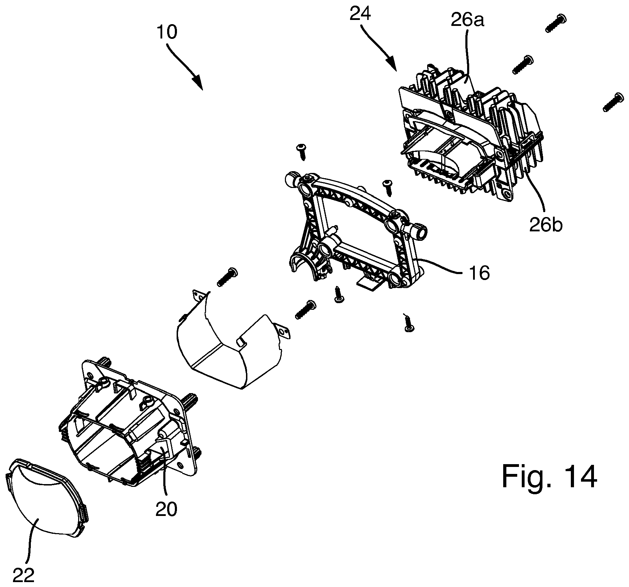

Figur 14 eine Explosionsdarstellung des gesamten Lichtmoduls aus Figur 4; und
Figur 15 einen erfindungsgemäßen Kraftfahrzeugscheinwerfer mit einem Lichtmodul.

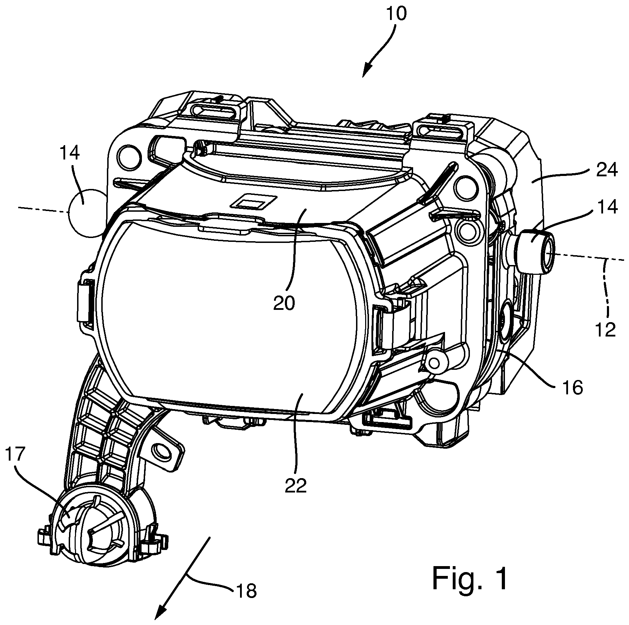

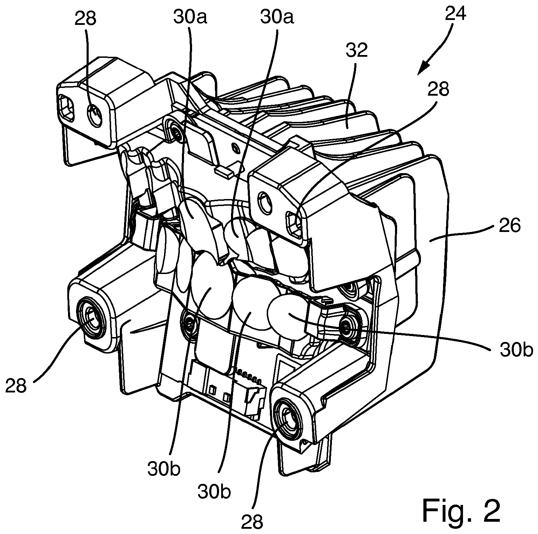

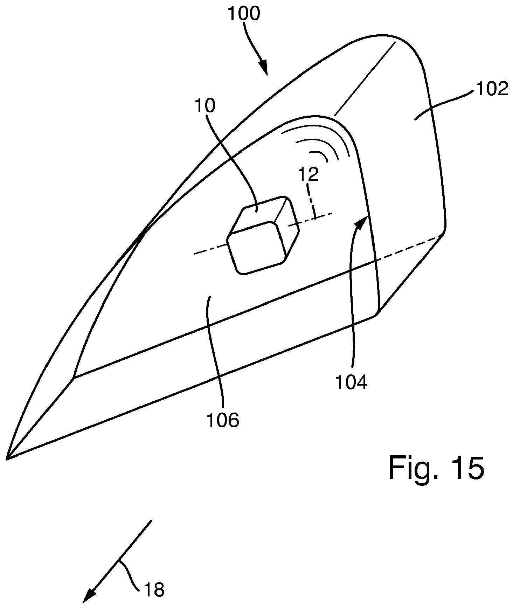

In Figur 1 ist ein aus dem Stand der Technik bekanntes Lichtmodul in seiner Gesamtheit mit dem Bezugszeichen 10 bezeichnet. Das Lichtmodul wird in ein Gehäuse 102 (vgl. Figur 15) eines Kraftfahrzeugscheinwerfers 100 um eine horizontale Achse 12 schwenkbar eingebaut. Die Schwenkachse 12 wird durch Lagerstellen 14 gebildet, die seitlich an einem Halterahmen 16 des Lichtmoduls 10 angeordnet und in entsprechenden Lagerstellen in dem Scheinwerfergehäuse 102 gelagert sind. Der Halterahmen 16 besteht vorzugsweise aus Kunststoff. Seitlich an dem Halterahmen 16 ist auch ein Hebel 17 angeordnet, an dem ein Betätigungselement (nicht dargestellt) angelenkt ist, welches die Schwenkbewegung des Lichtmoduls 10 um die horizontale Achse 12 bewirkt. An der Vorderseite in einer Lichtaustrittsrichtung 18 ist an dem Halterahmen 16 eine Linsenhalterung 20 befestigt, welche eine Projektionslinse 22 des Lichtmoduls 10 hält. An der Rückseite des Halterahmens 16 ist eine Kühlkörpereinheit 24 des Lichtmoduls 10 befestigt, die im Detail in Figur 2 gezeigt ist.

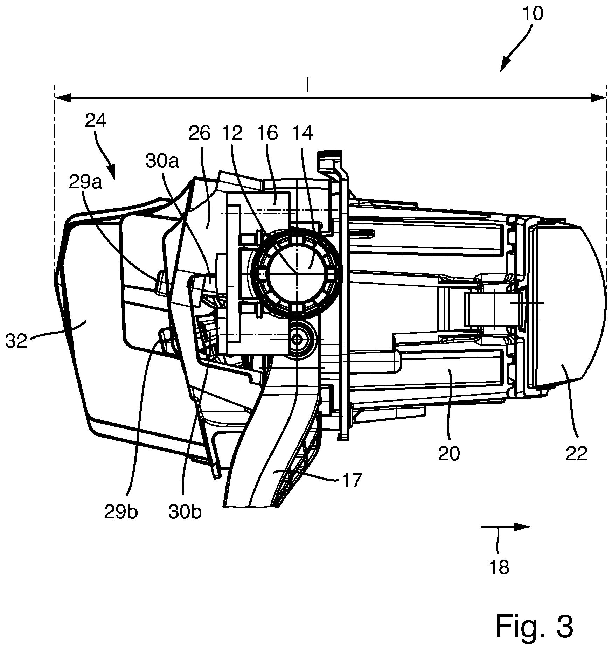

Die Kühlkörpereinheit 24 umfasst zunächst den eigentlichen Kühlkörper 26, der aus einem gut wärmeleitfähigen Material, insbesondere Metall, vorzugsweise Aluminium, gefertigt ist. Dieser ist im Stand der Technik aus einem Stück gefertigt. Der Kühlkörper 26 ist an mehreren Befestigungsstellen 28, bspw. mittels Schrauben, an dem Halterahmen 16 befestigt. Im Inneren des Kühlkörpers 26 sind matrixartig über-und/oder nebeneinander mehrere LEDs zum Emittieren von Licht und in Hauptabstrahlrichtung vor den LEDs sind Primäroptiken umfassend mehrere Vorsatzoptiken 30 zum Bündeln des von den LEDs ausgesandten Lichts und zum Umlenken des Lichts in Richtung der Projektionslinse 22 angeordnet. In dem hier gezeigten Beispiel sind zwei Reihen von LEDs und Vorsatzoptiken 30a, 30b vorgesehen. In Figur 2 sind die LEDs hinter (unter) den Vorsatzoptiken 30a, 30b angeordnet und deshalb nicht zu sehen. In Figur 3 sind die LEDs angedeutet und mit den Bezugszeichen 29a, 29b bezeichnet. Der Kühlkörper 26 dient dazu, von den LEDs während ihres Betriebs abgegebene Wärme an die Umgebung abzugeben. Er umfasst an seiner Rückseite Kühlrippen 32, um die Fläche zur Wärmeabgabe an die Umgebung zu vergrößern und die Wärmeabgabe effizienter zu gestalten.

Das bekannte Lichtmodul 10 umfasst ein erstes Element zur Erzeugung einer abgeblendeten Lichtverteilung mit einer horizontalen Helldunkelgrenze, dem die in Figur 3 gezeigte obere Reihe an LEDs 29a und die in Figur 2 gezeigte obere Reihe an Vorsatzoptiken 30a zugeordnet ist. Zur Realisierung der Helldunkelgrenze kann im Strahlengang des von der oberen Reihe an LEDs 29a ausgesandten und von der oberen Reihe der Vorsatzoptiken 30a gebündelten Lichts ein Blendenelement (nicht gezeigt) angeordnet sein, das zumindest einen Teil des ausgesandten Lichts abschattet. Eine Kante des Blendenelements wird von der Projektionslinse 22 als Helldunkelgrenze auf die Fahrbahn vor dem Kraftfahrzeug abgebildet. Ferner umfasst das Lichtmodul 10 ein zweites Element zur Ausleuchtung eines Fernbereichs oberhalb der Helldunkel¬grenze und zur Realisierung einer Fernlichtverteilung. Dem zweiten Element ist die untere Reihe an LEDs 29b und Vorsatzoptiken 30b zugeordnet. Das von den beiden Elementen ausgesandte Licht wird von der Projektionslinse 22 als resultierende Lichtverteilung des Lichtmoduls 10 auf der Fahrbahn vor dem Kraftfahrzeug abgebildet.

Im Stand der Technik ist das gesamte Lichtmodul 10 mit seinen verschiedenen Elementen als eine integrale Einheit ausgebildet. Wenn in einem der Elemente eine andere Lichtverteilung erzeugt werden soll, bspw. durch das erste Element eine abgeblendete Lichtverteilung mit einer größeren Lichtstärke, muss das gesamte Lichtmodul 10 neu ausgelegt und entwickelt werden, da dies leistungsfähigere oder mehr LEDs 29a des ersten Elements aufgrund der größeren Abwärme in der Regel auch eine Umgestaltung des Kühlkörpers 26 erforderlich macht. Zudem ist die Anordnung und Kontaktierung der LEDs 29a eine andere, was die Verwendung einer anderen Platine, auf der die LEDs 29a befestigt und elektrisch kontaktiert sind, erforderlich macht. Das bekannte Lichtmodul 10 ist insbesondere nicht modular aufgebaut, so dass nicht einfach einzelne Bauteile der einzelnen Elemente durch andere Bauteile ersetzt werden können, um eine andere Lichtverteilung zu erzeugen. Zudem weist das bekannte Lichtmodul 10 eine Länge 1 auf. Es wird eine geringere Länge 1 des Lichtmoduls 10 angestrebt, damit der Bauraum des Lichtmoduls 10 im Scheinwerfergehäuse und damit der von dem Scheinwerfer in der Fahrzeugkarosserie erforderliche Bauraum reduziert werden kann.

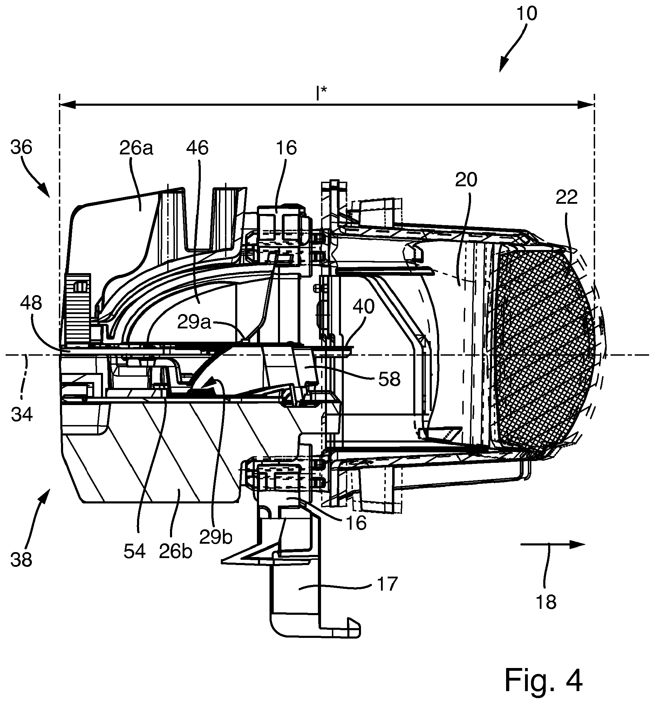

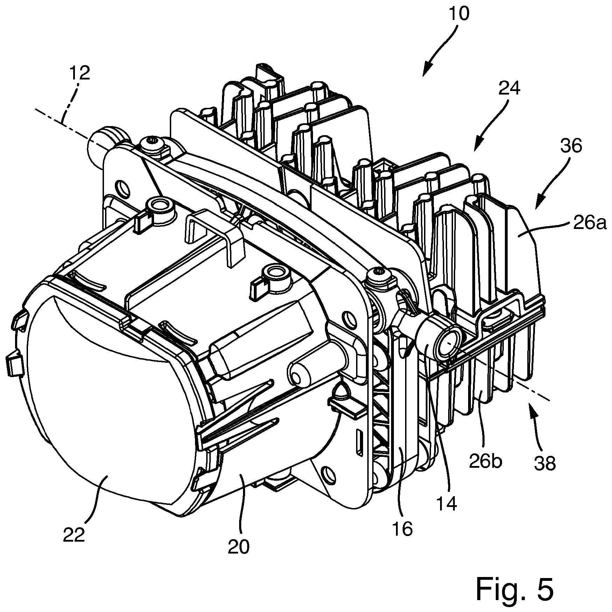

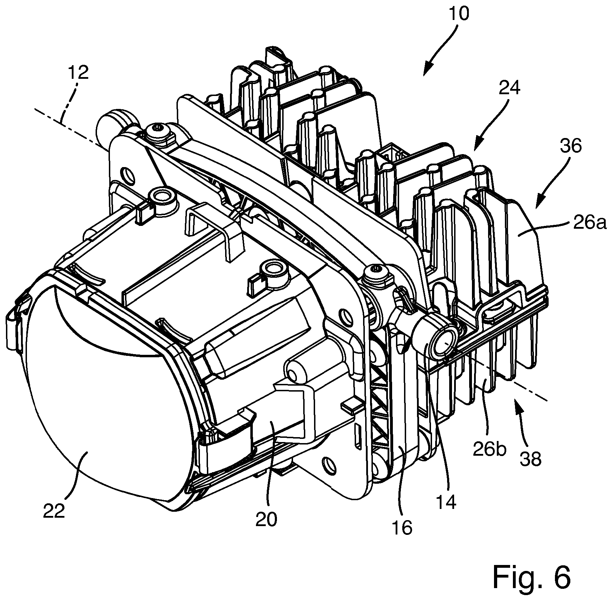

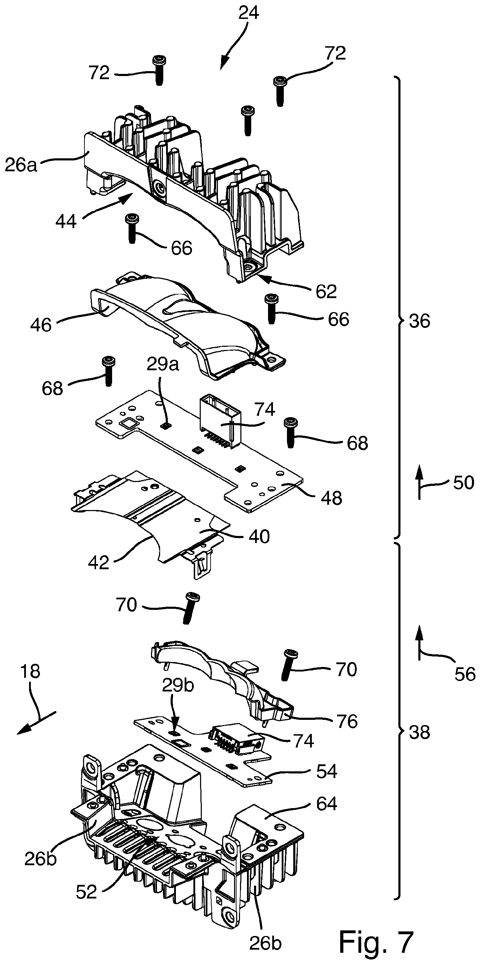

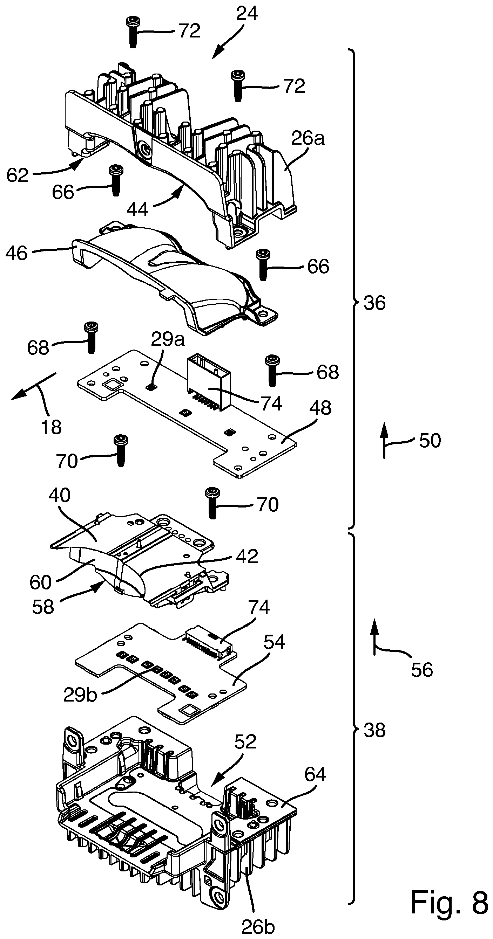

Gemäß der vorliegenden Erfindung wird ein modular aufgebautes Lichtmodul 10 vorgeschlagen. In diesem Sinne wird vorgeschlagen, dass das Lichtmodul 10 einschließlich des Kühlkörpers 26 durch eine horizontale Trennebene 34 in die beiden Untermodule unterteilt ist, wobei sämtliche Bauteile des ersten Untermoduls oberhalb der horizontalen Ebene 34 und sämtliche Bauteile des zweiten Untermoduls unterhalb der horizontalen Ebene 34 angeordnet sind. Da die Projektionslinse 22 funktional weder dem einen noch dem anderen Untermodul zugeordnet werden kann, ist sie als einziges nicht durch die Trennebene 34 unterteilt. In den Figuren 4 bis 6 sind verschiedene Ausführungsformen eines erfindungsgemäßen Lichtmoduls 10 gezeigt. Figur 4 zeigt eine erste Ausführungsform in einer Seitenansicht, teilweise im Schnitt. Das Lichtmodul 10 aus Figur 4 ist in Figur 6 in einer perspektivischen Ansicht gezeigt. In Figur 8 ist diese Ausführungsform in einer Explosionsansicht gezeigt. Figur 5 zeigt eine andere Ausführungsform, die in Figur 7 in einer Explosionsansicht gezeigt ist. Die Untermodule sind mit den Bezugszeichen 36 und 38 bezeichnet. Dem oberen Untermodul 36 ist ein oberer Kühlkörper 26a und dem unteren Untermodul 38 ein unterer Kühlkörper 26b zugeordnet.

Bei dem Beispiel aus den Figuren 4, 6 und 8 erzeugt das obere Untermodul 36 eine herkömmliche Abblendlichtverteilung mit einer horizontalen Helldunkelgrenze oder einen Teil davon (z.B. Grundlicht oder Spotlicht). Die Helldunkelgrenze dann dabei je nach Ausgestaltung des Blendenelements 40 (vgl. Figur 8) bzw. von dessen Vorderkante 42 einen asymmetrischen Verlauf aufweisen. Dies ist in dem hier gezeigten Beispiel der Fall. Die resultierende Helldunkelgrenze hat eine größere Reichweite auf der eigenen Verkehrsseite und dient bspw. für eine herkömmliche Abblendlichtverteilung oder ein Spotlicht einer Abblendlichtverteilung. Alternativ kann die Helldunkelgrenze bei einer anderen Ausgestaltung der Vorderkante 42 des Blendenelements 40 einen symmetrischen Verlauf aufweisen. Eine solche Helldunkelgrenze wird bspw. für ein breit streuendes Grundlicht einer Abblendlichtverteilung verwendet. Das Blendenelement 40 ist vorzugsweise verspiegelt, so dass das abgeschattete Licht zumindest zum Teil reflektiert wird.

Der obere Kühlkörper 26a des oberen Untermoduls 36 des erfindungsgemäßen Lichtmoduls 10 umfasst eine Vertiefung 44, in welche die übrigen Bauteile des Untermoduls 36 eingesetzt sind. Diese Bauteile umfassen bspw. eine Primäroptik in Form eines Reflektors 46 sowie eine Platine 48 mit den darauf angeordneten und elektrisch kontaktierten LEDs 29a. Die LEDs 29a strahlen bei in dem Lichtmodul 10 verbauter Platine 48 Licht in eine nach oben in Richtung des Reflektors 46 gerichtete Hauptabstrahlrichtung 50 ab. Der Reflektor 46 bündelt das Licht der LEDs 29a und lenkt es in die Lichtaustrittsrichtung 18 in Richtung der Projektionslinse 22 um. Auch das dem oberen Untermodul 36 zugeordnete Blendenelement 40 bzw. dessen Vorderkante 42 ist im montierten Zustand des Lichtmoduls 10 entweder oberhalb, zumindest aber auf der horizontalen Trennebene 34 angeordnet.

Bei dem Beispiel aus den Figuren 4, 6 und 8 erzeugt das untere Untermodul 38 eine Fernlichtverteilung in Form eine Matrix- oder Streifen-Fernlichts. Dabei wird der ausgeleuchtete Bereich oberhalb der Helldunkelgrenze in mehrere vertikale streifenförmige Segmente unterteilt, wobei jeder der Streifen durch das Licht von mindestens einer der LEDs 29b ausgeleuchtet wird. Durch gezieltes Ansteuern der LEDs 29b können einzelne Streifen gedimmt oder ausgeschaltet werden, bspw. um eine Blendung von darin befindlichen anderen Verkehrsteilnehmern (z.B. vorausfahrende oder entgegenkommende Fahrzeuglenker) zu verhindern. Die anderen Verkehrsteilnehmer werden durch geeignete Sensorik (z.B. eine Frontkamera) und Auswertung der Sensorsignale im Kraftfahrzeug detektiert und die einzelnen LEDs 29b entsprechend angesteuert.

Auch der untere Kühlkörper 26b weist eine Vertiefung 52 auf, in welche die übrigen Bauteile des unteren Untermoduls 38 eingesetzt werden. Die LEDs 29b sind auf einer Platine 54 angeordnet und senden Licht in eine Hauptabstrahlrichtung 56 aus, die in etwa parallel zu der Hauptabstrahlrichtung 50 der oberen LEDs 29a gerichtet ist. Die Primäroptik ist in diesem Fall als ein abgewinkelter Lichtleiter 58 aus einem massiven Kunststoffmaterial ausgebildet, in den über eine den LEDs 29b zugewandte Lichteintrittsfläche an der Unterseite das von den LEDs 29b in Richtung 56 emittierte Licht eingekoppelt wird. Der Lichtleiter 58 weist eine schräg stehende Umlenkfläche auf, die als eine totalreflektierende Grenzfläche des Lichtleiters 58 ausgebildet ist. Die eingekoppelten Lichtstrahlen werden an der Umlenkfläche in Richtung einer Lichtaustrittsfläche 60 in Lichtaustrittsrichtung 18 und in Richtung der Projektionslinse 22 umgelenkt.

Das Blendenelement 40 des oberen Untermoduls 36 kann mittels Heißprägen an dem abgewinkelten Lichtleiter 58 des unteren Untermoduls 38 befestigt und zusammen mit diesem in die Vertiefung 52 des unteren Kühlkörpers 26b eingesetzt werden. Dadurch entfällt ein aufwendiges Justieren und Befestigen des Blendenelements 40 in Bezug auf die oberen LEDs 29a und in Bezug auf den Lichtleiter 58. Durch eine hochpräzise Fertigung und Montage des Lichtmoduls 10 ist das Blendenelement 40 bzw. dessen Vorderkante 42 in einer genau definierten Position bezüglich der oberen LEDs 29a angeordnet und im Lichtmodul 10 befestigt. Das ändert jedoch nichts daran, dass in einem montierten Zustand des Lichtmoduls 10 das Blendenelement 40, zumindest aber dessen Vorderkante 42, oberhalb der horizontalen Trennebene 34 angeordnet ist.

An der Unterseite des oberen Kühlkörpers 26a ist eine Auflagefläche 62 und an der Oberseite des unteren Kühlkörpers 26b eine entsprechende Auflagefläche 64 ausgebildet. Die Auflageflächen 62, 64 erstrecken sich über einen Großteil einer entgegen der Lichtaustrittsrichtung 18 gerichteten Rückseite sowie an den Seiten der Kühlkörper 26a, 26b der beiden Untermodule 36, 38. Nach dem Einsetzen der einzelnen Bauteile des Lichtmoduls 10 in die Vertiefungen 44, 52 der Kühlkörper 26a, 26b können die Bauteile an den entsprechenden Kühlkörpern 26a, 26b befestigt werden, bspw. mittels Schrauben 66 (für den Reflektor 46), Schrauben 68 (für die Leiterplatte 48 mit den oberen LEDs 29a) und/oder Schrauben 70 (für die Einheit umfassend den Lichtleiter 58 und das Blendenelement 40). Selbstverständlich können die Bauteile auch auf andere Weise in den Vertiefungen befestigt werden, bspw. mittels einer Rast- oder Clipsverbindung. Schließlich können die beiden Kühlkörper 26a, 26b mit ihren Auflageflächen 62, 64 aufeinander gesetzt und aneinander befestigt werden, bspw. mittels Schrauben 72. Es ist bevorzugt, wenn die einzelnen Bauteile der Untermodule 36, 38 in den Vertiefungen 44, 52 nicht extra befestigt werden müssen und sich eine Befestigung der Bauteile in den Vertiefungen 44, 52 dadurch automatisch ergibt, dass die beiden Kühlkörper 26a, 26b aneinander befestigt werden. Das kann dadurch erreicht werden, dass Bauteile der Untermodule 36, 38 zwischen den Kühlkörpern 26a, 26b eingespannt oder klemmend gehalten werden. Insbesondere ist bevorzugt, dass die Leiterplatte 48 des oberen Untermoduls 36 zumindest mit einem Teil ihrer Oberflächen auf den Auflageflächen 62, 64 aufliegt und zwischen den aneinander befestigten Kühlkörpern 26a, 26b eingespannt wird. Dadurch kann auch eine verbesserte Kühlung der LEDs 29a erzielt werden, da die Leiterplatte 48, auf der die LEDs 29a angeordnet sind, zumindest mit einem Teil ihrer beiden gegenüberliegenden Oberflächen wärmetechnisch an beide Kühlkörper 26a, 26b angebunden ist.

Der modulare Aufbau des erfindungsgemäßen Lichtmoduls 10, insbesondere der kompakte und hochintegrierte Aufbau der Kühlkörpereinheit 24 des erfindungsgemäßen Lichtmoduls 10 ermöglicht eine sehr kompakte Bauweise des Lichtmoduls 10 mit einer besonders geringen Baulänge, wobei 1* des erfindungsgemäßen Lichtmoduls 10 < 1 des Lichtmoduls aus dem Stand der Technik ist (vgl. Figuren 3 und 4).

Die Kühlkörper 26a, 26b der beiden Untermodule 36, 38 weisen jeweils an einer entgegen der Lichtaustrittsrichtung 18 gerichteten Rückseite eine Öffnung auf, über die Steckerelemente 74 von außerhalb der Kühlkörper 26a, 26b zugänglich sind, die auf Leiterplatten 48, 54 mit der mindestens einen darauf befestigten und elektrisch kontaktierten LED 29a, 29b der jeweiligen Untermodule 36, 38 angeordnet und elektrisch kontaktiert sind. Somit werden die oberen LEDs 29a, die auf der Leiterplatte 48 angeordnet sind, durch die in dem Kühlkörper 26a ausgebildete Öffnung von oben kontaktiert. Die unteren LEDs 29b, die auf der Leiterplatte 54 angeordnet sind, werden durch die in dem Kühlkörper 26b ausgebildete Öffnung von hinten kontaktiert. Die Öffnungen unterbrechen die umlaufende Auflageflächen 62, 64 der Kühlkörper 26a, 26b.

Bei dem anderen Ausführungsbeispiel der Figuren 5 und 7 ist das obere Untermodul 36 zur Erzeugung der Abblendlichtverteilung identisch wie bei dem ersten Ausführungsbeispiel ausgebildet. Alle Bauteile einschließlich des Kühlkörpers 26a des ersten Untermoduls 36 können somit unverändert übernommen werden. Anders als bei dem ersten Ausführungsbeispiel erzeugt das untere Untermodul 38 kein Matrix-Fernlicht, sondern ein ganz normales Fernlicht, wobei der Fernbereich oberhalb der Helldunkelgrenze durch das von dem zweiten Untermodul 38 ausgesandte Licht ausgeleuchtet wird. Dabei umfasst das Untermodul 38 nun eine Platine 54, auf der mindestens eine LED 29b, vorzugsweise mindestens eine Hochleistungs-LED, befestigt und elektrisch kontaktiert ist. Die Primäroptik ist in diesem Fall als ein Reflektor 76 ausgebildet, der das von den LEDs 29b emittierte Licht bündelt und in Lichtaustrittsrichtung 18 umlenkt. Die Platine 54 mit den darauf befestigten LEDs 29b ist vorzugsweise entgegen der Lichtaustrittsrichtung 18 leicht nach hinten geneigt, so dass die Hauptabstrahlrichtung der LEDs 29b schräg nach hinten gerichtet ist. Deshalb wird auch ein anderer Kühlkörper 26b als bei dem ersten Ausführungsbeispiel verwendet. Insbesondere hat der hier verwendete Kühlkörper 29b Auflagestellen oder eine Auflagefläche, auf der die Platine 54 schräg nach hinten geneigt aufgesetzt ist. Anders als bei dem ersten Ausführungsbeispiel wird die Blendenelement 40 vor dem Einsetzen in einen der Kühlkörper 26a, 26b nicht an der Primäroptik 76 des unteren Untermoduls 38 befestigt.

Auch bei diesem Beispiel ist es jedoch denkbar, dass das Blendenelement 40 in die Vertiefung 52 des unteren Kühlkörpers 26b eingesetzt wird, obwohl sie dem oberen Untermodul 36 zugeordnet ist. In dem gezeigten Beispiel wird das Blendenelement 40 mittels einer Rastverbindung auf dem Rand der Vertiefung 52 an dem Kühlkörper 26b befestigt.

Wie oben anhand der beiden Ausführungsbeispiele gezeigt, kann bei dem erfindungsgemäßen Lichtmodul 10 durch einfachen Austausch einzelner Bauteile von einem oder mehreren Untermodulen 36, 38 durch jedes der Lichtmodule eine gewünschte Lichtverteilung erzeugt werden. Ein komplettes Neudesign des gesamten Lichtmoduls 10, wenn eines der Untermodule 36, 38 eine andere Lichtverteilung erzeugen soll, ist somit nicht mehr notwendig.

Dementsprechend ist es auch möglich, durch den Austausch einzelner oder mehrerer Bauteile des oberen Untermoduls 36 dieses so zu verändern, dass es eine andere Lichtverteilung (bspw. eine abgeblendete Lichtverteilung mit einer anderen Lichtstärke) als in den Ausführungsbeispielen erzeugt. So wäre es bspw. denkbar, dass andere LEDs 29a mit einer höheren oder geringen Leistung und/oder in einer anderen Anzahl verwendet werden, so dass das Untermodul 36 eine abgeblendete Lichtverteilung mit einer anderen Lichtstärke erzeugt. Unter Umständen setzt die Verwendung anderer LEDs 29a die Verwendung einer anderen Platine 48 voraus, bspw. aus einem anderen Material oder mit anderen Abmessungen, einem anderen Steckerelement 74 etc. Des Weiteren kann es möglich sein, dass die Verwendung anderer LEDs 29a auch die Verwendung eines anderen Kühlkörpers 26a erfordert, bspw. mit einer höheren Wärmeableitfähigkeit, aus einem anderen Material, mit anderen Abmessungen etc. Durch einen Austausch des Blendenelements 40 gegen ein anderes mit einem anderen Verlauf der Vorderkante 42 könnte ferner eine abgeblendete Lichtverteilung mit veränderter Helldunkelgrenze erzielt werden. So kann bspw. durch Verändern der Beschnittkontur (bei einem Blick senkrecht zur Flächenerstreckung des Blendenelements 40) des Blendenelements 40 die Schärfe der Helldunkelgrenze und durch Verändern der Biegekontor (bei einem Blick parallel zur Flächenerstreckung des Blendenelements 40) des Blendenelements 40 die Reichweite der abgeblendeten Lichtverteilung variiert werden.

Schließlich ist in Figur 15 ein erfindungsgemäßer Kraftfahrzeugscheinwerfer 100 gezeigt, der ein Licht undurchlässiges Gehäuse 102 aufweist, das vorzugsweise aus Kunststoff gefertigt ist. Das Gehäuse 102 hat in Lichtaustrittsrichtung 18 eine Lichtaustrittsöffnung 104, die durch eine transparente Abdeckscheibe 106 aus Glas oder Kunststoff verschlossen ist. Im Inneren des Gehäuses 102 ist ein erfindungsgemäßes Lichtmodul 10 angeordnet, das eine abgeblendete Lichtverteilung (z.B. ein Abblendlicht oder einen Teil davon) sowie eine Fernlichtverteilung erzeugen kann. Zusätzlich zu dem Lichtmodul 10 können in dem Gehäuse 102 auch noch andere Lichtmodule zur Erzeugung anderer Lichtverteilungen (z.B. Nebellicht) oder der gleichen Lichtverteilungen wie das Lichtmodul 10 angeordnet sein. Ferner ist es denkbar, dass in dem Gehäuse 102 auch noch Leuchtenmodule zur Erzeugung einer oder mehrerer Leuchtenfunktion (z.B. Blinklicht, Positionslicht, Tagfahrlicht) angeordnet sind.

## Patentansprüche

1. Lichtmodul (10) eines Scheinwerfers (100) eines Kraftfahrzeugs, das Lichtmodul (10) umfassend ein erstes Untermodul (36) zur Erzeugung einer abgeblendeten Lichtverteilung mit einer horizontalen Helldunkelgrenze, ein zweites Untermodul (38) zur Ausleuchtung eines Fernbereichs oberhalb der Helldunkelgrenze und zur Realisierung einer Fernlichtverteilung und eine Projektionslinse (22) zum Abbilden des von den beiden Untermodulen (36, 38) ausgesandten Lichts als resultierende Lichtverteilung des Lichtmoduls (10) auf einer Fahrbahn vor dem Kraftfahrzeug, beide Untermodule (36, 38) jeweils umfassend folgende Bauteile:
mindestens eine LED (29a; 29b) als Lichtquelle zum Emittieren von Licht, mindestens einen Kühlkörper (26a; 26b) in thermischem Kontakt mit den LEDs (29a; 29b) zum Ableiten der während des Betriebs der LEDs (29a; 29b) erzeugten Wärme und eine Primäroptik (30) zur Bündelung des von den LEDs (29a; 29b) emittierten Lichts und zum Umlenken des Lichts in Richtung der Projektionslinse (22), **dadurch gekennzeichnet, dass** das Lichtmodul (10) einschließlich des Kühlkörpers (26a, 26b) durch eine horizontale Trennebene (34) in die beiden Untermodule (36, 38) unterteilt ist, wobei sämtliche oben genannte Bauteile des ersten Untermoduls (36) oberhalb der horizontalen Ebene (34) und sämtliche oben genannte Bauteile des zweiten Untermoduls (38) unterhalb der horizontalen Ebene (34) angeordnet sind, wobei die Kühlkörper (26a, 26b) der beiden Untermodule (36, 38) jeweils eine Vertiefung (44, 52) aufweisen, in der die LEDs und die Primäroptik des jeweiligen Untermoduls (36, 38) angeordnet sind, und wobei die LEDs (29a; 29b) jeweils Licht in eine Hauptabstrahlrichtung (50, 56) nach oben bzw. in einen oberen Halbraum abstrahlen.

2. Lichtmodul (10) nach Anspruch 1, **dadurch gekennzeichnet, dass** in die Vertiefung (44) des Kühlkörpers (26a) des ersten Untermoduls (36) nacheinander die Primäroptik (46) und dann eine Leiterplatte (48) mit der mindestens einen darauf befestigten und elektrisch kontaktierten LED (29a) eingesetzt sind.

3. Lichtmodul (10) nach Anspruch 1 oder 2, **dadurch gekennzeichnet, dass** in die Vertiefung (52) des Kühlkörpers (26b) des zweiten Untermoduls (38) nacheinander eine Leiterplatte (54) mit der mindestens einen darauf befestigten und elektrisch kontaktierten LED (29b) und dann die Primäroptik (58; 76) eingesetzt sind.

4. Lichtmodul (10) nach Anspruch 1 bis 3, **dadurch gekennzeichnet, dass** ein sich bei montiertem Lichtmodul (10) in einer horizontalen Ebene erstreckendes plattenartiges verspiegeltes Blendenelement (40) mit einer Vorderkante (42), welche die Projektionslinse (22) als horizontale Helldunkelgrenze der abgeblendeten Lichtverteilung auf der Fahrbahn vor dem Kraftfahrzeug abbildet, als letztes Bauteil in die Vertiefung (52) des Kühlkörpers (26b) des zweiten Untermoduls (38) eingesetzt ist, wobei die Vorderkante (42) des Blendenelements (40) bei montiertem Lichtmodul (10) in bzw. oberhalb der horizontalen Trennebene (34) des Lichtmoduls (10) angeordnet ist.

5. Lichtmodul (10) nach Anspruch 3 oder 4, **dadurch gekennzeichnet, dass** die Primäroptik des zweiten Untermoduls (38) als ein massiver transparenter Kunststoffkörper (58) ausgebildet ist, der eine der mindestens einen LED (29b) des zweiten Untermoduls (38) zugewandte Lichteintrittsfläche, über die von der mindestens einen LED ausgesandtes Licht eintritt, totalreflektierende Grenzflächen zum Umlenken des eingetretenen Lichts und eine bei montiertem Lichtmodul (10) der Projektionslinse (22) zugewandte Lichtaustrittsfläche (60) aufweist, über die das umgelenkte Licht aus dem Kunststoffkörper (58) austritt.

6. Lichtmodul (10) nach Anspruch 4 und 5, **dadurch gekennzeichnet, dass** das Blendenelement (40) vor dem Einsetzen des Kunststoffkörpers (58) in die Vertiefung (52) des Kühlkörpers (26b) des zweiten Untermoduls (38) an dem Kunststoffkörper (58) mittels Heißprägen befestigt ist und anschließend zusammen mit diesem in die Vertiefung (52) des Kühlkörpers (26b) des zweiten Untermoduls (38) eingesetzt ist.

7. Lichtmodul (10) nach einem der Ansprüche 1 bis 6, **dadurch gekennzeichnet, dass** die Kühlkörper (26a, 26b) der beiden Untermodule (36, 38) jeweils eine Auflagefläche (62, 64) aufweisen, die bei montiertem Lichtmodul (10) einander gegenüber liegen und zumindest mittelbar miteinander in Kontakt stehen.

8. Lichtmodul (10) nach Anspruch 7, **dadurch gekennzeichnet, dass** sich die Auflageflächen (62, 64) über einen Großteil einer entgegen der Lichtaustrittsrichtung (18) gerichteten Rückseite sowie an den Seiten der Kühlkörper (26a, 26b) der beiden Untermodule (36, 38) erstrecken.

9. Lichtmodul (10) nach Anspruch 7 oder 8, **dadurch gekennzeichnet, dass** die Kühlkörper (26a, 26b) bei montiertem Lichtmodul (10) aneinander befestigt sind, insbesondere mittels Schrauben (72).

10. Lichtmodul (10) nach einem der Ansprüche 1 bis 9, **dadurch gekennzeichnet, dass** die Kühlkörper (26a, 26b) der beiden Untermodule (36, 38) jeweils an einer entgegen der Lichtaustrittsrichtung (18) gerichteten Rückseite eine Öffnung aufweisen, über die Steckerelemente (74) von außerhalb der Kühlkörper (26a, 26b) zugänglich sind, die auf Leiterplatten (48, 54) mit der mindestens einen darauf befestigten und elektrisch kontaktierten LED (29a, 29b) der jeweiligen Untermodule (36, 38) angeordnet und elektrisch kontaktiert sind.

11. Lichtmodul (10) nach einem der Ansprüche 1 bis 10, **dadurch gekennzeichnet, dass** die beiden Untermodule (36, 38) mit einer in Lichtaustrittsrichtung (18) gerichteten Vorderseite der Kühlkörper (26a, 26b) an einem Halterahmen (16) befestigt sind, über den das Lichtmodul (10) in einem Gehäuse (102) des Scheinwerfers (100) befestigt ist.

12. Lichtmodul (10) nach Anspruch 11, **dadurch gekennzeichnet, dass** auf einer den Untermodulen (36, 38) gegenüberliegenden Vorderseite des Halterahmens (16) ein Linsenhalter (20) mit der daran befestigten Projektionslinse (22) befestigt ist.

13. Kraftfahrzeugscheinwerfer (100) umfassend ein Gehäuse (102) mit einer in Lichtaustrittsrichtung (18) ausgebildeten Lichtaustrittsöffnung (104), welche durch eine transparente Abdeckscheibe (106) verschlossen ist, **dadurch gekennzeichnet, dass** im Inneren des Gehäuses (102) mindestens ein Lichtmodul (10) nach einem der Ansprüche 1 bis 12 angeordnet ist.

## Claims

1. Light module (10) of a headlight (100) of a motor vehicle, the light module (10) comprising a first submodule (36) for generating a dimmed light distribution with a horizontal light/dark boundary, a second submodule (38) for illuminating a far region above the light/dark boundary, and for achieving a high beam distribution and a projection lens (22) for imaging the light emitted by the two submodules (36, 38) as a resulting light distribution of the light module (10) on a roadway in front of the motor vehicle, both submodules (36, 38) in each case comprising the following components:
at least one LED (29a; 29b) as a light source for emitting light, at least one heat sink (26a; 26b) in thermal contact with the LEDs (29a; 29b) for dissipating the heat generated during operation of the LEDs (29a; 29b) and a primary optical unit (30) for bundling the light emitted by the LEDs (29a; 29b) and for deflecting the light in the direction of the projection lens (22), **characterized in that** the light module (10) including the heat sink (26a, 26b) is divided into the two submodules (36, 38) by a horizontal separating plane (34), all the above-mentioned components of the first submodule (36) being arranged above the horizontal plane (34) and all the above-mentioned components of the second submodule (38) being arranged below the horizontal plane (34), the heat sinks (26a, 26b) of the two submodules (36, 38) each having a recess (44, 52) in which the LEDs and the primary optical unit of the relevant submodule (36, 38) are arranged, and the LEDs (29a; 29b) each emitting light upward or into an upper half-space in a main emission direction (50, 56).

2. Light module (10) according to claim 1, **characterized in that** the primary optical unit (46) and then a printed circuit board (48) having the at least one LED (29a) attached and electrically contacted thereto are inserted one after the other into the recess (44) of the heat sink (26a) of the first submodule (36).

3. Light module (10) according to claim 1 or claim 2, **characterized in that** a printed circuit board (54) having the at least one LED (29b) fastened and electrically contacted thereto and then the primary optical unit (58; 76) are inserted one after the other into the recess (52) of the heat sink (26b) of the second submodule (38).

4. Light module (10) according to claims 1 to 3, **characterized in that** a plate-like mirrored shutter element (40), which extends in a horizontal plane when the light module (10) is mounted and has a leading edge (42) which images the projection lens (22) as a horizontal light/dark boundary of the dimmed light distribution on the roadway in front of the motor vehicle, is inserted as the last component into the recess (52) of the heat sink (26b) of the second submodule (38), the leading edge (42) of the shutter element (40) being arranged in or above the horizontal separating plane (34) of the light module (10) when the light module (10) is mounted.

5. Light module (10) according to claim 3 or claim 4, **characterized in that** the primary optical unit of the second submodule (38) is designed as a solid transparent plastics body (58) which has a light entry surface facing the at least one LED (29b) of the second submodule (38), via which light entry surface light emitted by the at least one LED enters, total-reflecting boundary surfaces for deflecting the light that has entered, and a light exit surface (60) facing the projection lens (22) when the light module (10) is mounted, via which light exit surface the deflected light emerges from the plastics body (58).

6. Light module (10) according to claims 4 and 5, **characterized in that** before the plastics body (58) is inserted into the recess (52) of the heat sink (26b) of the second submodule (38), the shutter element (40) is fastened to the plastics body (58) by means of hot stamping and is subsequently inserted together therewith into the recess (52) of the heat sink (26b) of the second submodule (38).

7. Light module (10) according to any of claims 1 to 6, **characterized in that** the heat sinks (26a, 26b) of the two submodules (36, 38) each have a support surface (62, 64) which, when the light module (10) is mounted, lie opposite one another and are at least indirectly in contact with one another.

8. Light module (10) according to claim 7, **characterized in that** the support surfaces (62, 64) extend over a large part of a rear face directed counter to the light exit direction (18) and on the faces of the heat sinks (26a, 26b) of the two submodules (36, 38).

9. Light module (10) according to claim 7 or claim 8, **characterized in that** the heat sinks (26a, 26b) are fastened to one another when the light module (10) is mounted, in particular by means of screws (72).

10. Light module (10) according to any of claims 1 to 9, **characterized in that** the heat sinks (26a, 26b) of the two submodules (36, 38) each have an opening on a rear face directed counter to the light exit direction (18), via which opening connector elements (74) are accessible from outside the heat sinks (26a, 26b), which connector elements are arranged and electrically contacted on printed circuit boards (48, 54) having the at least one LED (29a, 29b) of the respective submodules (36, 38) fastened and electrically contacted thereto.

11. Light module (10) according to any of claims 1 to 10, **characterized in that** the two submodules (36, 38) are fastened to a holding frame (16) by means of a front face of the heat sinks (26a, 26b) directed in the light exit direction (18), via which holding frame the light module (10) is fastened in a housing (102) of the headlight (100).

12. Light module (10) according to claim 11, **characterized in that** a lens holder (20) is fastened with the projection lens (22) fastened thereto to a front face of the holding frame (16) opposite the submodules (36, 38) .

13. Motor vehicle headlight (100) comprising a housing (102) having a light exit opening (104) formed in the light exit direction (18), which light exit opening is closed by a transparent cover plate (106), **characterized in that** at least one light module (10) according to any of claims 1 to 12 is arranged in the interior of the housing (102).

## Revendications

1. Module d'éclairage (10) d'un phare (100) d'un véhicule automobile, le module d'éclairage (10) comprenant un premier sous-module (36) pour générer une répartition de lumière en feu de croisement avec une limite horizontale de clarté/obscurité, un second sous-module (38) pour éclairer une zone éloignée au-dessus de la limite de clarté/obscurité et pour réaliser une répartition de lumière en feu de route et une lentille de projection (22) pour former la lumière émise par les deux sous-modules (36, 38) en tant que répartition de lumière résultante du module d'éclairage (10) sur une chaussée devant le véhicule automobile, les deux sous-modules (36, 38) comprenant respectivement les composants suivants:
au moins une DEL (29a; 29b) en tant que source de lumière pour émettre de la lumière, au moins un dissipateur thermique (26a; 26b) en contact thermique avec les DEL (29a; 29b) pour dissiper la chaleur générée pendant le fonctionnement des DEL (29a; 29b) et une optique primaire (30) pour concentrer la lumière émise par les DEL (29a; 29b) et pour rediriger la lumière vers la lentille de projection (22), **caractérisé en ce que** le module d'éclairage (10), y compris le dissipateur thermique (26a, 26b), est divisé par un plan de séparation horizontal (34) en les deux sous-modules (36, 38), tous les composants mentionnés ci-dessus du premier sous-module (36) étant disposés au-dessus du plan horizontal (34) et tous les composants mentionnés ci-dessus du second sous-module (38) étant disposés au-dessous du plan horizontal (34), les dissipateurs thermiques (26a, 26b) des deux sous-modules (36, 38) ayant chacun un renfoncement (44, 52) dans lequel sont agencées les DEL et l'optique primaire du sous-module respectif (36, 38), et les DEL (29a; 29b) émettant chacune de la lumière dans une direction d'émission principale (50, 56) vers le haut ou dans un demi-espace supérieur.

2. Module d'éclairage (10) selon la revendication 1, **caractérisé en ce que** dans le renfoncement (44) du dissipateur thermique (26a) du premier sous-module (36) sont insérées successivement l'optique primaire (46), puis un circuit imprimé (48) avec au moins une DEL (29a) fixée sur celui-ci et en contact électrique avec celui-ci.

3. Module d'éclairage (10) selon la revendication 1 ou 2, **caractérisé en ce qu'**un circuit imprimé (54) comprenant ladite au moins une DEL (29b) fixée sur celui-ci et en contact électrique avec celui-ci, puis l'optique primaire (58; 76), sont insérés l'un après l'autre dans le renfoncement (52) du dissipateur thermique (26b) du second sous-module (38).

4. Module d'éclairage (10) selon l'une quelconque des revendications 1 à 3, **caractérisé en ce qu'**un élément formant diaphragme (40) de type plaque et rendu réfléchissant qui s'étend dans un plan horizontal lorsque le module d'éclairage (10) est monté, avec un bord avant (42) que la lentille de projection (22) reproduit en tant que limite horizontale de clarté/obscurité de la répartition de lumière en feu de croisement sur la chaussée devant le véhicule automobile, est inséré en tant que dernier composant dans le renfoncement (52) du dissipateur thermique (26b) du second sous-module (38), le bord avant (42) de l'élément formant diaphragme (40) étant agencé dans ou au-dessus du plan de séparation horizontal (34) du module d'éclairage (10) lorsque le module d'éclairage (10) est monté.

5. Module d'éclairage (10) selon la revendication 3 ou 4, **caractérisé en ce que** l'optique primaire du second sous-module (38) est réalisée sous la forme d'un corps en matière plastique (58) transparent solide, qui comprend une surface d'entrée de lumière tournée vers ladite au moins une DEL (29b) du second sous-module (38) et par laquelle la lumière émise par ladite au moins une DEL entre, des surfaces de délimitation à réflexion totale permettant de dévier la lumière entrée, et une surface de sortie de lumière (60) tournée vers la lentille de projection (22) lorsque le module d'éclairage (10) est monté, et par laquelle la lumière déviée sort du corps en matière plastique (58).

6. Module d'éclairage (10) selon les revendications 4 et 5, **caractérisé en ce qu'**avant l'insertion du corps en matière plastique (58) dans le renfoncement (52) du dissipateur thermique (26b) du second sous-module (38), l'élément formant diaphragme (40) est fixé au corps en matière plastique (58) par estampage à chaud et est ensuite inséré avec celui-ci dans le renfoncement (52) du dissipateur thermique (26b) du second sous-module (38) .

7. Module d'éclairage (10) selon l'une quelconque des revendications 1 à 6, **caractérisé en ce que** les dissipateurs thermiques (26a, 26b) des deux sous-modules (36, 38) comprennent chacun une surface d'appui (62, 64) qui se font face lorsque le module d'éclairage (10) est monté et sont au moins indirectement en contact l'une avec l'autre.

8. Module d'éclairage (10) selon la revendication 7, **caractérisé en ce que** les surfaces d'appui (62, 64) s'étendent sur une grande partie d'un côté arrière dirigé à l'opposé de la direction de sortie de lumière (18) ainsi que sur les côtés des dissipateurs thermiques (26a, 26b) des deux sous-modules (36, 38).

9. Module d'éclairage (10) selon la revendication 7 ou 8, **caractérisé en ce que** les corps de refroidissement (26a, 26b) sont fixés les uns aux autres lorsque le module d'éclairage (10) est monté, en particulier au moyen de vis (72).

10. Module d'éclairage (10) selon l'une quelconque des revendications 1 à 9, **caractérisé en ce que** les dissipateurs thermiques (26a, 26b) des deux sous-modules (36, 38) comprennent chacun une ouverture sur un côté arrière dirigé à l'opposé de la direction de sortie de lumière (18), par l'intermédiaire de laquelle ouverture des éléments de connecteur (74) sont accessibles depuis l'extérieur des dissipateurs thermiques (26a, 26b), qui sont agencés sur des circuits imprimés (48, 54) comprenant ladite au moins une DEL (29a, 29b) des sous-modules (36, 38) respectifs fixée sur et en contact électrique avec ceux-ci, et qui sont en contact électrique avec ceux-ci.

11. Module d'éclairage (10) selon l'une quelconque des revendications 1 à 10, **caractérisé en ce que** les deux sous-modules (36, 38) sont fixés, avec un côté avant des dissipateurs thermiques (26a, 26b) dirigé dans la direction de sortie de lumière (18), à un cadre de retenue (16) par l'intermédiaire duquel le module d'éclairage (10) est fixé dans un boîtier (102) du phare (100).

12. Module d'éclairage (10) selon la revendication 11, **caractérisé en ce qu'**un support de lentille (20) avec la lentille de projection (22) fixée à celui-ci est fixé sur un côté avant du cadre de support (16) opposé aux sous-modules (36, 38).

13. Phare de véhicule automobile (100) comprenant un boîtier (102) avec une ouverture de sortie de lumière (104) formée dans la direction de sortie de lumière (18) et fermée par une plaque de recouvrement transparente (106), **caractérisé en ce qu'**au moins un module d'éclairage (10) selon l'une quelconque des revendications 1 à 12 est agencé à l'intérieur du boîtier (102).
